# EUROPÄISCHE PATENTSCHRIFT

(11) **EP 1 202 223 B1**
(45) Veröffentlichungstag und Bekanntmachung des Hinweises auf die Patenterteilung: **13.02.2013**
(21) Anmeldenummer: 01250259.7
(22) Anmeldetag: 13.07.2001
(51) Int. Cl.: G07B 17/00, G06F 1/00

(54) **Postmachine und Verfahren zu deren Initialisierung**
Mail processing machine and method for its initialisation
Machine postale et procédé pour l'initialisation

(30) Priorität: 27.07.2000 DE 10036623
(43) Veröffentlichungstag der Anmeldung: 02.05.2002
(73) Patentinhaber: Francotyp-Postalia GmbH, 16547 Birkenwerder (DE)
(72) Erfinder: Reisinger, Katrin, 16515 Oranienburg (DE)
(74) Vertreter: Thoenes, Dieter

(56) Entgegenhaltungen:
- EP-A- 0 762 338
- EP-A- 0 825 566
- EP-A- 0 927 968
- EP-A2- 0 762 335
- WO-A-98/13790
- GB-A- 2 334 360
- US-A- 4 783 745

## Beschreibung

Die Erfindung betrifft eine Postmaschine gemäß dem Oberbegriff des Patent - Anspruchs. Unter einer Postmaschine sollen zum Beispiel Frankiermaschinen und portoberechnende Waagen, d.h. Postwaagen mit intergrierten Portorechner und ähnliche Postgeräte verstanden werden, für die eine Postzulassung erforderlich ist.

Eine Postmaschine der vorstehend genannten Art ist aus der EP 762 335 A2 bekannt.

Frankiermaschinen sind seit den zwanziger Jahren bekannt und werden noch heute ständig vervollkommnet. Ihr Prinzip beruht darauf, daß geldwerte Daten in der Frankiermaschine verwaltet werden. Bei jeder Frankierung wird der vorhandene Restbetrag im Descending Register durch den auf das Versandstück gedruckten Frankierbetrag reduziert. Wenn der Restbetrag aufgebraucht ist, kann die Frankiermaschine mit einem vorgegebenen Guthabenbetrag nachgeladen werden, wobei der Restbetrag um den Guthabenbetrag erhöht wird. Die Frankiermaschinen sind zum Schutz gegenüber einer Manipulation z.B. des Restbetrages im Descending Register mit einem Sicherheitsgehäuse ausgestattet.

Neuere Frankiermaschinen der Anmelderin setzen digital arbeitende Druckmodule ein, wie beispielsweise weltweit erstmals Tintenstrahldrucker in den Frankiermaschinen vom Typ JetMail^{®} oder Thermotransferdrucker in den Frankiermaschinen vom Typ T1000. Damit ist es prinzipiell möglich, auf einen gefüllten Brief im Bereich des Frankierstempels andere Informationen bzw. beliebig anders zu drucken.

In EP 660 269 A2, wird noch von einer Frankiermaschine ausgegangen, die eine verschließbare und versiegelte Klappe hat, die den Zugriff auf die dahinter liegende Hardware (EPROM-Sockel) nur einem begrenztem speziell vertrauenswürdigen Personenkreis erlaubt. Hier konnte davon ausgegangen werden, daß durch diese Personen keine Manipulation der Frankiermaschine erfolgt. Diese verschließbare und versiegelte Klappe wird auch als Postklappe bezeichnet, die nur vom Postbeamten geöffnet werden darf, beispielsweise um ein Guthaben im Postamt nachzuladen.

Eine andere Lösung der Anmelderin geht von einer Klappe aus, die entsprechend für das sogenannte "Master-Prom"-Verfahren ausgebildet ist. Bei diesem wechselt ein Service-Techniker das Klischee- bzw. Portotabellen-ROM gegen ein spezielles ROM - dem MASTER-PROM - aus, das ihm nach dem Start der JetMail zum Zugriff auf u.a. hoch sensible Bereiche der Maschine autorisiert. So können beispielsweise Geldbeträge manipuliert werden.

Bei Frankiermaschinen die mit einem digitalen Drucker ausgestattet sind, kann leicht ein Werbeklischee gewechselt werden. Allerdings wird die Anzahl an Werbeklischees durch die Speicherkapazität des EPROMs beschränkt. Der Service-Techniker sollte deshalb einen Zugriff wenigsten auf den Klischee-EPROM-Sockel haben, um den Klischee-EPROM selbständig wechseln zu können. Es wurde also eine Lösung für eine Frankiermaschine gesucht, die bei einer teilweise geöffneten Postklappe dennoch die Sicherheit garantieren kann. Im EP 762 338 A2 wurde deshalb zur Überprüfung der Integrität der Daten und des Programmcodes von Klischee-EPROMs, die bei einer Frankiermaschine mit geöffneter Postklappe in den extern zugänglichen Sockel eingesetzt werden das Bilden einer MAC-Prüfsümme über den Dateninhalt eines EPROMs vorgeschlagen. Das Auswechseln der Bausteine geht relativ einfach, wenn sich die ROM-Bausteine z.B. in DIL-Stecksockeln befinden. Werden zukünftig im Zuge der Miniaturisierung von Bauelementen andere Gehäuseformen gewählt, so wird eine Verbindung über Stecksockel nicht mehr möglich sein, d.h. der Austausch von ROM-Bausteinen wird für den Service-techniker unmöglich werden.

Aus der US 4,783,745 ist eine Postmaschine bekannt, die für autorisiertes Personal zugängig gemacht werden kann, um eine Initialisierung bzw. eine Reinitialisierung der Postmaschine nach der Herstellung bzw. am Einsatzort durchführen zu können. Hierzu wird die Postmaschine durch Eingabe eines extern erzeugten Codes in einen Servicemodus überführt. Die Autorisierung wird anhand eines weiteren Entsperrcodes überprüft, der den Zugriff auf die interne Betriebssoftware erlaubt, um Daten in die Postmaschine zu laden bzw. zu verändern. Der Entsperrcode kann durch jegliches vorhandenes Eingabemittel übertragen werden.

Der Erfindung liegt die Aufgabe zugrunde, eine Postmaschine der eingangs genannten Art anzugeben, die keine besondere Schnittstelle für das Autorisierungsmittel benötigt und die ständig einen ROM-Baustein mit einem Initialisierungsprogramm aufweist, wobei in die Postmaschine über eine von aussen zugängliche Schnittstelle Initialisierungsdaten abgesichert eingebracht werden, so dass ein unberechtigtes Initialisieren verhindert wird. Die Initialisierung soll ohne den Austausch des ROM-Bausteins auskommen.

Die Aufgabe wird mit den Merkmalen der Anordnung nach dem Anspruch gelöst.

Unter Initialisierung wird eine erstmalig vor Inbetriebnahme der Maschine am Eintrittspunkt des Bestimmungslandes bzw. am Warenannahmeort stattfindende Routine zur Eingabe von Initialisierungsdaten verstanden. Ein Autorisierungsmittel wird dazu in eine operative Verbindung mit der Postmaschine gebracht und ist als eine leicht auswechselbare elektronische Hardware-Einheit (Dongle oder Chipkarte) ausgebildet. Letztere wird an die Postmaschine indirekt über eine Datenquelle, nämlich einen Personalcomputer PC oder Laptop angeschlossen. Die Postmaschine, zum Beispiel eine Frankiermaschine, verfügt über einen nicht entfernbaren Programmspeicher mit einem Initialisierungsprogramm und über ein postalisches Sicherheitsmodul (Postage Secure Device oder Secure Accounting Device), das als Überprüfungsmittel für die Autorisation der Eingabe von Initialisierungsdaten ausgebildet ist. Letzteres erfolgt bei Autorisiertheit direkt per Tastatur der Frankierma-schine oder indirekt über den PC bzw. Laptop oder von einer Datenzentrale in den Meter bzw. Sicherheitsmodul. Das Autorisierungsmittel wird über eine Schnittstelle des PC's in operative Verbindung mit dem Meter gebracht.

Die Folgende Beschreibung erläutert die Erfindung anhand der Figuren. Es zeigen:
- Figur 1,: Prinzipschaltbild mit einer Datenquelle und mit einem Dongle jeweils an den Schnittstellen der Base einer Frankiermaschine,
- Figur 2,: Prinzipschaltbild einer erfindungsgemäßen Postmaschine mit einem Dongle an einer Datenquelle, die an einer Schnittstelle der Frankiermaschine angeschlossen ist,
- Figur 3,: Perspektivische Ansicht einer Frankiermaschine vom Typ JetMail^{®} mit Dongle von hinten und Ansicht einer Datenquelle vom Typ Laptop von vom,
- Figur 4,: Prinzipschaltbild mit einer Datenquelle und mit einem Dongle jeweils an den Schnittstellen der Base einer Frankiermaschine und mit einem in die Base integrierten Chipkartenleser, wobei der Dongle ein Autorisierungsmittel bildet,
- Figur 5,: Perspektivische Ansicht einer Frankiermaschine vom Typ JetMail^{®} von hinten und mit einem in die Base integrierten Chipkartenleser, wobei eine Chipkarte das Autorisierungsmittel bildet,
- Figur 6,: Prinzipschaltbild mit einer Datenquelle an der Schnittstellen der Base einer Frankiermaschine und mit einem in die Base integrierten Chipkartenleser, wobei die Chipkarte das Autorisierungsmittel bildet,
- Figur 7,: Perspektivische Ansicht einer Frankiermaschine vom Typ JetMail^{®} von hinten und mit einem in das Meter integrierten Chipkartenleser, wobei die Chipkarte das Autorisierungsmittel bildet,
- Figur 8,: Prinzipschaltbild einer erfindungsgemäßen Postmaschine mit einem Dongle an einer Datenquelle, die an einer Schnittstelle der Frankiermaschine angeschlossen ist, und mit einem in das Meter integrierten Chipkartenleser, wobei der Dongle das Autorisierungsmittel bildet,
- Figur 9,: Prinzipschaltbild mit einer Datenquelle an der Schnittstellen der Base einer Frankiermaschine und mit einem in das Meter integrierten Chipkartenleser, wobei die Chipkarte das Autorisierungsmittel bildet,
- Figur 10,: Perspektivische Ansicht einer Waage von hinten mit integrierten Chipkartenleser, wobei die Chipkarte das Autorisierungsmittel ist,
- Figur 11,: Prinzipschaltbild einer Postmaschine mit SAD und Chipkarte mit Modem-Schnittstelle für eine Datenquelle.

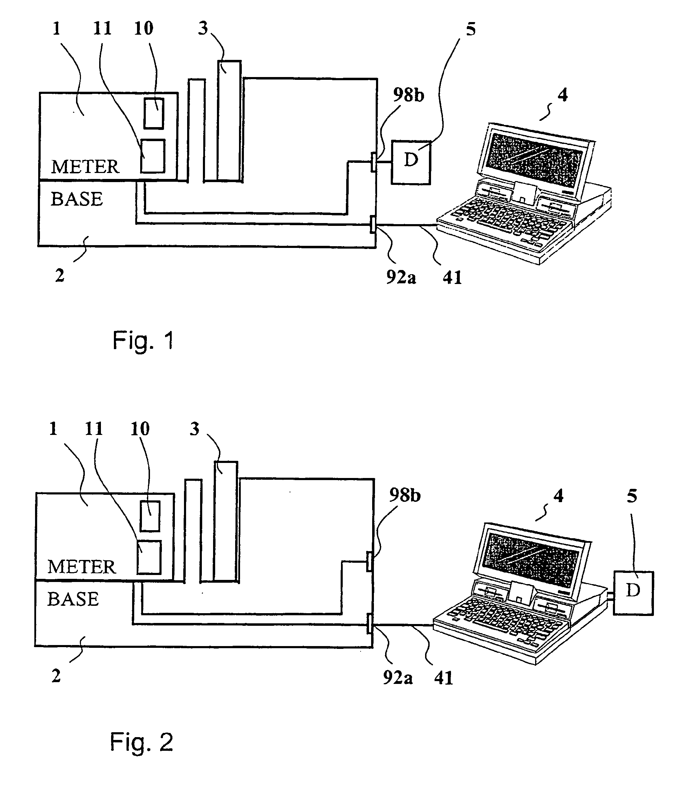

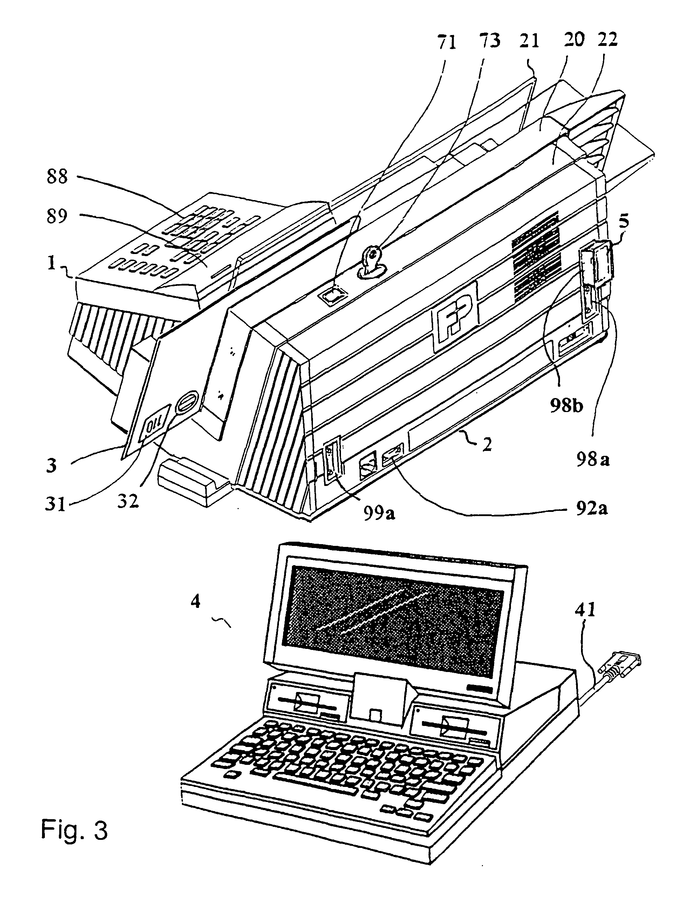

In der Figur 1 ist ein Prinzipschaltbild mit einer Datenquelle und mit einem Dongle jeweils an den Schnittstellen der Base einer Frankiermaschine gezeigt. Die Frankiermaschine besteht aus einem Meter 1 und einer Base 2 und ist in an sich bekannter Weise dazu ausgestattet, ein Poststück 3 zu frankieren. Eine perspektivische Ansicht der Frankiermaschine vom Typ JetMail^{®} wird in Fig.3 von hinten dargestellt. Zu deren Initialisierung wird eine Datenquelle 4 an eine erste serielle Schnittstelle 92a der Frankiermaschine angeschlossen. Die Datenquelle 4 ist zum Beispiel ein Service-PC oder vorzugsweise ein Laptop, Ein Dongle 5 wird an eine zweite serielle Schnittstelle 98b der Frankiermaschine angeschlossen. Der Meter 1 der Frankiermaschine weist mindestens einen Programmspeicher 10 mit einem Initialisierungsprogramm und ein Sicherheitsmodul 11 auf, zur Überprüfung der Autorisiertheit vor und während der Initialisierung.

Die Figur 2 zeigt ein Prinzipschaltbild mit einem Dongle 5 an einer Datenquelle 4, die an die erste serielle Schnittstelle 92a der Frankiermaschine angeschlossen ist. Die zweite serielle Schnittstelle 98b der Frankiermaschine bleibt frei für andere Zwecke. Die Frankiermaschine besteht aus einem Meter 1 und einer Base 2, um ein Poststück 3 zu frankieren. Der Meter 1 ist mindestens mit einem Programmspeicher 10 und mit einem Sicherheitsmodul 11 ausgerüstet.

In der Figur 3 ist eine perspektivische Ansicht einer Frankiermaschine vom Typ JetMail^{®} von hinten dargestellt. Die Base 2 der Frankiermaschine hat eine erste serielle Schnittstelle 92a, an welcher die Datenquelle 4 angeschlossen werden kann. Die Fig. 3 zeigt auch eine Ansicht einer Datenquelle vom Typ Laptop von vorn, welche über ein Kabel 41 mit der ersten seriellen Schnittstelle 92a der Frankiermaschine verbindbar ist. Auf die zweite serielle Schnittstelle 98b ist ein Dongle 5 gesteckt. Beide serielle Schnittstellen 92, 98b und weitere Systemschnittstellen 98a und 99a befinden sich auf der Rückseite der Frankiermaschine und stehen in operativer Verbindung mit dem Meter 1. Die Betätigungselemente 88 einer Tastatur und die Anzeigeelemente 89 im Schirmbild einer Anzeigeeinheit des Meters 1 bilden ein Userinterface, welches zur Eingabe von INIT-Werten ausgebildet ist. Ein bevorzugtes Eingabemittel für die INIT-Werte ist jedoch die Datenquelle 4. Die Base 2 ist mit einem Schalter 71 und mit einem Schlüsselschalter 73 ausgestattet, die hinter einer Führungsplatte 20 angeordnet und von der Gehäuseoberkante 22 zugänglich ist. Nach dem Einschalten der Frankiermaschine mittels dem Schalter 71 und 73 wird ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 20 seitlich begrenzt. An die Schnittstellen 98a und 99a sind weitere Stationen bzw. Geräte anschließbar, um mit der Frankiermaschine in Kommunikationsverbindung zu treten. Nach Eingabe von Initialisierungsdaten, einschließlich eines Null-Guthabenwerts, erfolgt ein Test. Beim Frankieren mit dem Portowert Null erhöht sich bei der Abrechnung nur der Wert im Stückzähler-Register. Der Portowert Null wird dabei auf ein Versandstück ( Brief 3 ) gedruckt.

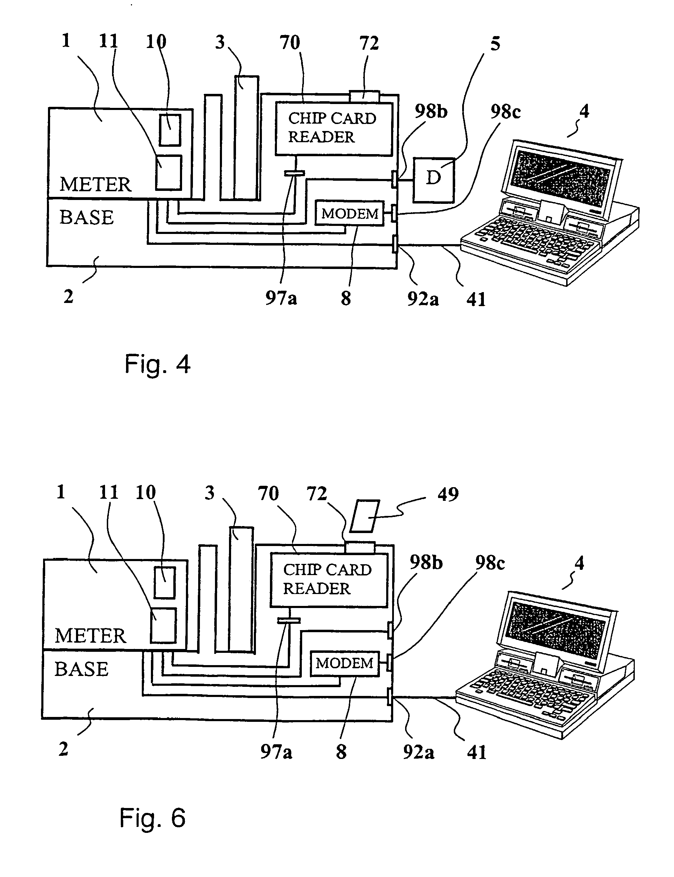

In der Figur 4 wird ein Prinzipschaltbild mit einer Datenquelle 4 an der Schnittstelle 92a und mit einem Dongle 5 an der Schnittstelle 98b der Base 2 einer Frankiermaschine dargestellt. Bei den Ausführungsvarianten gemäß Figuren 1, 3 und 4 ist vorgesehen, dass die Datenquelle 4 Daten zur Initialisierung der Frankiermaschine 1, 2 enthält und an die erste Schnittstelle 92a der Base 2 der Frankiermaschine ansteckbar ausgebildet ist. Das Autorisierungsmittel 5 ist an eine zweite Schnittstelle 98b der Base 2 der Frankiermaschine steckbar ausgebildet. Vorzugsweise dient ein Dongle 5 als Autorisierungsmittel. In der Base 2 sind optional ein Modem 8 und eine weitere Schnittstelle 98c zum Anschluss des integrierten Modems 8 an ein Telefonnetz enthalten. Über das Modem 8 kann beispielsweise ein Guthabenbetrag von einer entfernten Datenzentrale in das postalische Sicherheitsmodul 11 der Frankiermaschine geladen werden. Mit dem postalischen Sicherheitsmodul 11 kann ausserdem überprüft werden, ob das im Programmspeicher 10 gespeicherte Initialisierungsprogramm autorisiert aufgerufen wird und ordnungsgemäss abläuft. In der Variante nach Figur 4 ist das Meter 1 mit einem in die Base 2 integrierten Chipkartenleser 70 über eine weitere innere serielle Schnittstelle 97a verbunden. Nach Abschluss des Initialisierungsverfahren kann eine nicht gezeigte Chipkarte in den Slot 72 eingesteckt werden, um weitere Daten zu laden. Solche weiteren Daten betreffen zum Beispiel die Bilddaten für einen vorbestimmten Orts- und Datums-Stempel. Ein Verfahren und Anordnung zur Druckstempeleingabe in eine Frankiermaschine wurde bereits in der nicht vorveröffentlichten DE 199 13 066 A1 mitgeteilt. Mittels einer Chipkarte können befördererspezifische Druckbilddaten geladen oder für eine Frankiermaschinen-Ländervariante ausgewählt werden.

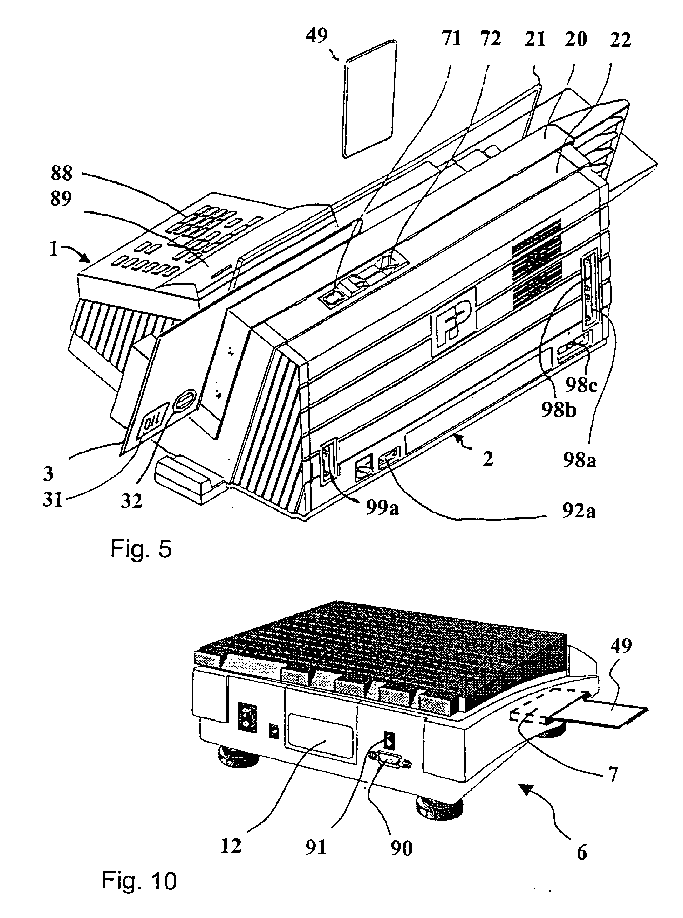

Die Figur 5 zeigt eine perspektivische Ansicht einer Frankiermaschine vom Typ JetMail^{®} von hinten, die einen in die Base integrierten Chipkartenleser mit einem Slot 72 hat. Die Chipkarten-Schreib/Leseeinheit 70 ist hinter der Führungsplatte 20 angeordnet und über den Slot 72 von der Gehäuseoberkante 22 zugänglich. Nach dem Einschalten der Frankiermaschine mittels dem Schalter 71 wird eine Chipkarte 49 von oben nach unten in den Einsteckschlitz 72 eingesteckt. Auf ein Dongle 5 wird in der Variante nach Figur 5 verzichtet, weil eine einsteckbare Chipkarte 49 hier als Autorisierungsmittel dient. Das Autorisierungsmittel Chipkarte 49 ist damit, wie auch bei den Ausführungsvarianten nach Figuren 1, 3, 4, 7 und 9 an die Frankiermaschine direkt angeschlossen. Im Unterschied zur Ausführungsvariante nach der Figur 4 wird kein Laptop 4 als Datenquelle angeschlossen, da die Eingabe der INIT-Werte auch auf andere Weise realisiert werden kann, beispielsweise per Chipkarte oder via Schnittstelle 98c und Modem.

In einer weiteren, in der Figur 6 dargestellten, Ausführungsvariante, ist im Unterschied zu der in der Figur 5 dargestellten Variante, eine Datenquelle 4 vorgesehen, die ein Initialisierungsdaten für eine Frankiermaschine enthält. Die Datenquelle 4 ist an eine erste Schnittstelle 92a der Base 2 der Frankiermaschine ansteckbar ausgebildet. Das Autorisierungsmittel 5 ist - gleich der in der Figur 5 dargestellten Variante - wieder eine Chipkarte 49, für welche ein Chipkartenleser 70 in die Base 2 integriert angeordnet ist. Der Chipkartenleser 70 ist über eine weitere innere Schnittstelle 97a mit dem Meter 1 operativ verbunden. Auch die innere Schnittstelle 97a ist eine serielle Schnittstelle. Die Base 2 enthält optional ein Modem 8 und eine Schnittstelle 98c zum Anschluss des Modems an ein Telefonnetz. Der Meter ist, wie anhand der Figur 4 bereits erläutert wurde, aufgebaut.

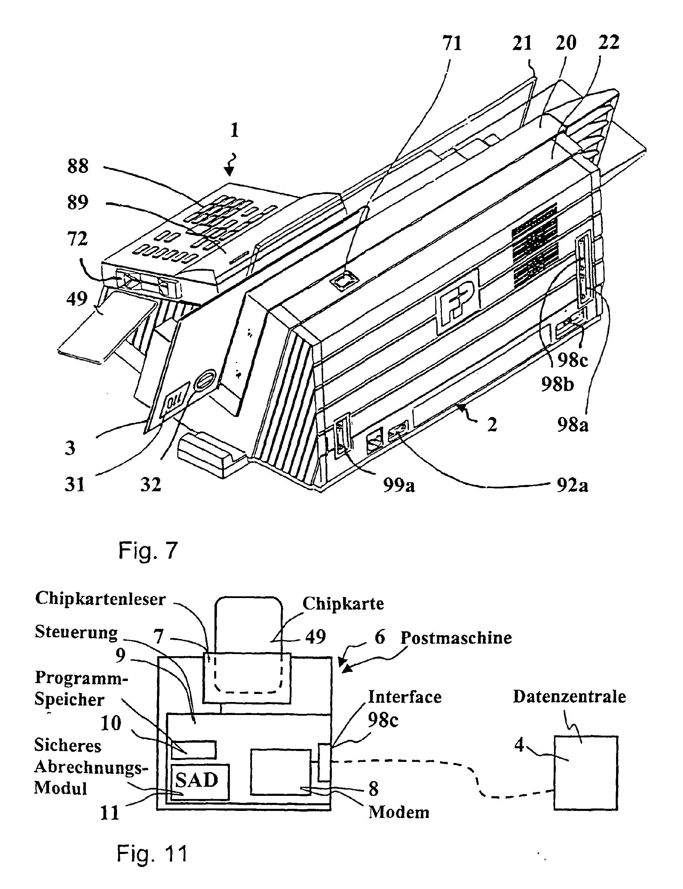

In der Figur 7 ist eine perspektivische Ansicht einer Frankiermaschine vom Typ JetMail^{®} von hinten dargestellt, wobei das Meter 1 mit einem integrierten Chipkartenleser 70 ausgestattet ist und wobei die Chipkarte das Autorisierungsmittel ist. Der in das Meter 1 der Frankiermaschine integrierte Chipkartenleser 70 ist - in nicht gezeigter Weise - über eine Schnittstelle an einen Bus des Meter 1 angekoppelt. Die weitere Ausgestaltung entspricht derjenigen, die anhand der Figur 5 bereits erläutert wurde.

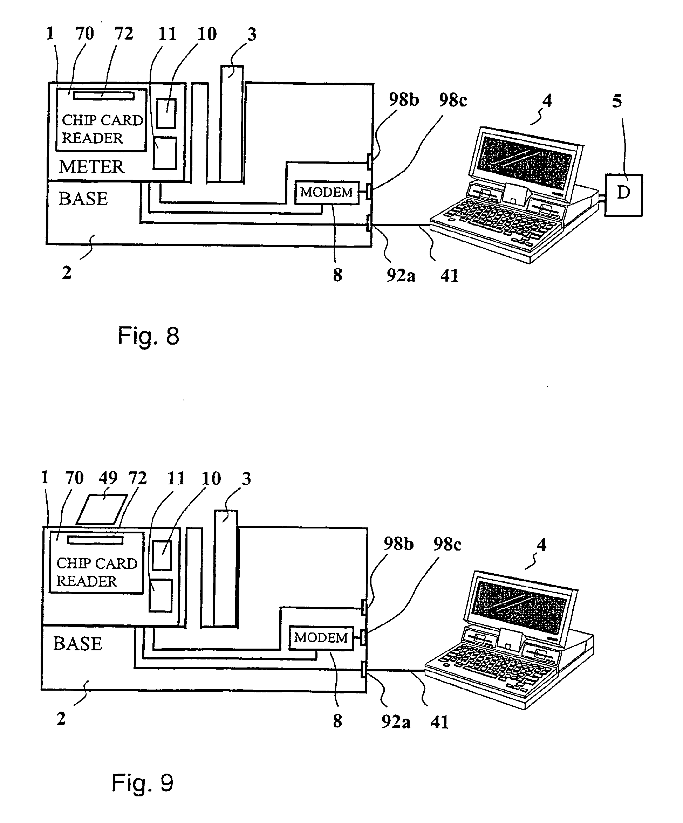

Die Figur 8 zeigt ein Prinzipschaltbild mit einem Dongle 5 an einer Datenquelle 4, die an einer Schnittstelle 92a der Frankiermaschine angeschlossen ist, und mit einem in das Meter 1 integrierten Chipkartenleser 70, wobei aber der Dongle 5 das Autorisierungsmittel ist. Das Autorisierungsmittel (Dongle) 5 ist über eine Parallelschnittstelle an die Datenquelle 4 angeschlossen ist. Die Datenquelle 4 ist zum Beispiel ein Personalcomputer oder vorzugsweise ein Laptop. Die Datenquelle 4 ist über eine serielle Schnittstelle 92a der Frankiermaschine an das Meter 1 angekoppelt. Das Autorisierungsmittel (Dongle) 5 ist damit, wie auch bei der Ausführungsvariante nach Figur 2, an die Frankiermaschine auf indirektem Wege angeschlossen. Es ist vorgesehen, dass das Meter 1 einen Programmspeicher 10 für das Initialisierungsprogramm und ein postalisches Sicherheitsmodul 11 als Überprüfungsmittel für die Autorisation einer Eingabe von Initialisierungsdaten, mindestens jedoch für die Autorisation einer Dateneingabe von vorbestimmten INIT-Werten aufweist.

In das Meter 1 ist optional ein Chipkartenleser 70 integriert worden. Der Chipkartenleser 70 ist - in nicht gezeigter Weise - über eine Schnittstelle des Meter 1 operativ mit einem internen Bus verbunden. Eine Chipkarte kann beispielsweise seitlich in einen Slot 72 eingesteckt werden. Die Base 2 enthält optional ein Modem 8 und eine Schnittstelle 98c zum Anschluss des Modems an ein Telefonnetz.

In der Figur 9 wird das Prinzipschaltbild für eine Ausführungsvariante mit einer an die Schnittstelle 92a der Base 2 einer Frankiermaschine angeschlossenen Datenquelle 4 und mit einem in das Meter integrierten Chipkartenleser 70 dargestellt, wobei die Chipkarte 49 das Autorisierungsmittel bildet. Die übrige Ausgestaltung entspricht derjenigen, die in anhand von Figur 8 bereits erläutert wurde.

In den Figuren 5, 6, 7 oder 9 sind Chipkarten 49 zum Einstecken in die Base 2 oder in das Meter 1 der Frankiermaschine vorgesehen. Die Chipkarten 49 enthalten zum Beispiel:
- einen Karten-Hersteller-Code MANCODE (15 Byte),
- einen Frankiermaschinen-Hersteller-Code FPCODE (1 Byte),
- einen Code für den physikalischen Kartentyp PHYSTYP (1 Byte),
- einen Personalisationscode MINIPERS (6 Byte), welcher die Code der Hersteller der Frankiermaschine, Hersteller der Chipkarte, Hersteller des Chips der Chipkarte verknüpft enthält,
- ein Startdatum VALSTARTDATE (4 Byte) für die Gültigkeit der Karte
- ein Endedatum VALENDDATE (4 Byte) für die Gültigkeit der Karte,
- ein Zugriffscode LOGICTYPE (1 Byte), welcher zeigt, dass eine Berechtigungskarte vorzugsweise für den Verkäufer vorliegt und
- eine einzigartige Berechtigungs-Nummer (4 Byte) sowie
- gegebenenfalls einen Länder-Code COUNTRYCODE (4 Byte).

Es ist vorgesehen, dass eine Überprüfung der Autorisiertheit vor und während der Initialisierung anhand einer einzigartigen Berechtigungsnummer vorgenommen wird, welche via Chipkarte 49 eingegeben wird. Alternativ kann die einzigartige Berechtigungs-Nummer via Dongle 5 eingegeben werden. Die Autorisiertheit ist gegeben, wenn die eingegebene einzigartigen Berechtigungsnummer mit einer im postalischen Sicherheitsmodul 11 gespeicherten Nummer ein vorbestimmtes Verhältnis hat.

In einer anderen Ausführungsvariante, die in der Figur 10 dargestellt wurde, ist die Postmaschine eine Waage 6 und das Autorisierungsmittel ist eine Chipkarte 49. Ein Chipkartenleser 7 ist in die Waage 6 integriert. Über jeweils eine Schnittstelle 90 bzw. 91 kann eine Frankiermaschine bzw. ein - nicht gezeigtes - externes Modem angeschlossen werden. Die Waage enthält beispielsweise ein Portomoduls 12, welches zusätzlich als Sicherheitsmodul zur Überprüfung der Autorisierung von Initialisierungsdaten arbeitet.

In einer weiteren Ausführungsvariante - die in der Figur 11 dargestellt wurde - ist vorgesehen, dass eine Chipkarten 49 eine Datenzentrale 4 autorisiert, einen Datenstrom zur Initialisierung der Postmaschine 6 zu liefern. Eine von der Postmaschine 6 entfernt angeordnete Datenquelle 4 (Laptop oder Personalcomputer PC oder eine Workstation) hat ein integriertes Modem und wird statt über die PC-Schnittstelle 92a nunmehr über eine Modem-Schnittstelle 98c an die Steuerung 9 der Postmaschine 6 angeschlossen. Die Postmaschine kann beispielsweise eine Frankiermaschine sein, welche nicht in Meter und Base getrennt werden kann und deren Steuerung 9 ein sicheres Abrechnungsmodul 11 aufweist. In die Postmaschine 6 ist ein Chipkartenleser 7 integriert, der mit der Steuerung 9 verbunden ist. Im Programmspeicher 10 der Steuerung 9 ist wieder ein Initialisierungsprogramm gespeichert. Die entfernte Datenquelle 4 ist eine Nachladezentrale, beispielsweise ein FP-Teleportodatenzentrum, oder eine spezielle Datenzentrale, welche via Schnittstelle 98c und Modem 8 die INIT-Daten bzw. -Werte liefert. Optional ist es möglich, den Chipkartenleser 7 und/oder das Modem 8 in die Steuerung 9 der Postmaschine 6 zu integrieren. Die Initialisierung einer Postmaschine erfolgt am Eintrittspunkt in das Bestimmungsland (Single Point of Entry) bzw. Warenannahmeort, der zwischen dem Herstellungs-und Versandort und dem Benutzungsort liegt. Am Warenannahmeort wird die Postmaschine für den Kunden fertig gemacht. Beispielsweise muß eine Frankiermaschine erst einmal bei der FP-Datenzentrale des jeweiligen Landes angemeldet werden, für welche die Postmaschine bestimmt ist. Vorzugsweise liegen der Warenannahmeort und der Benutzungsort im gleichem Land. Das Verfahren zur Initialisierung einer Postmaschine weist folgende Schritte auf:
1. Überführen in einen Initialisierungsmodus,
2. Autorisierung der Initialisierung mittels eines Autorisierungsmittels, beispielsweise einer Chipkarte 49 oder eines Dongles 5 und Überprüfung der Autorisierung mittels Sicherheitmoduls 11, um die Initialisierung bei fehlender Autorisierung zu verhindern,
3. Eingabe von Initialisierungsdaten, die wenigstens zum Teil aus einer Datenquelle (Datenzentrale 4) geliefert werden. Die Initialisierungsdaten können von einem an eine serielle Schnittstelle angeschlossenen Personalcomputer (PC) eingegeben werden. Der PC kann wiederum mittels Modem oder serielle oder parallele Verbindung mit einer Datenzentrale 4 verbunden sein. Die Postmaschine kann aber auch über Modem mit der Datenzentrale 4 verbunden sein, damit die Initialisierungsdaten in die Postmaschine eingegeben werden könnnen. Die Initialisierungsdaten können Schlüssel sein, die für die verschlüsselte Übertragung von Daten notwendig sind. Weiterhin können Geräte- und Hersteller-ID's übertragen werden, die in der Datenzentrale 4 gespeichert werden sowie kundenspezifische Daten (zum Beispiel Zipcode/Postleitzahl). Registerwerte (Minimal- und Maximalwerte für bestimmte Register) können ebenfalls übertragen werden. Nach der Übertragung von Initialisierungsdaten wird die Postmaschine zur Nutzung durch einen Benutzer frei geschaltet. Das Laden von Geld ist möglich und somit auch das Frankieren.
4. Beenden der Iniatialisierung und Aufhebung der Autorisierung durch Entfernen des Autorisierungsmittels.

Wie in den Figuren 5, 6, 7 oder 9, 10, 11 sind Chipkarten 49 als Autorisierungsmittel 5 vorgesehen und die Postmaschine 6 bzw. Base 2 oder das Meter 1 einer Frankiermaschine sind zum Einstecken der Chipkarte 49 mit einem Cipkartenleser, mit einer Modem-Schnittstelle 98c und mit einem Modem ausgerüstet. Werden die Chipkarten allein zur Initialisierung vorgesehen, dann heißt eine Chipkarte 49 Initialisierungskarte (INIT-Card). Alle oder wenigstens ein Teil der INIT-Daten bzw. -Werte werden dann von der entfernten Datenzentrale über die Modem-Schnittstelle 98c zur Frankiermaschine geliefert. Die Chipkarte 49 dient zur Autorisierung wenigstens desjenigen Teils der INIT-Daten bzw. - Werte, welche von der entfernten Datenzentrale über eine Modem-Schnittstelle 98c in die Frankiermaschine geladen werden. In den Figuren 5 und 7 ist die Modem-Schnittstelle 98c auf der Rückwand der Frankiermaschine JetMail dargestellt. Dabei ist vorgesehen, dass das zugehörige Initialisierungsprogramm mindestens teilweise in einem Programmspeicher (EPROM) gespeichert wird, der Bestandteil des Sicherheitmoduls 11 ist. Ein anderer Teil des Initialisierungsprogramms, insbesondere für Initialisierungsdaten, welche extern vom Sicherheitsmodul 11 nichtflüchtig gespeichert werden, ist Bestandteil eines separaten Programmspeichers (EPROM), welcher jedoch mit dem Sicherheitmodul 11 in Verbindung steht. Das Sicherheitsmodul verhindert das Laden bzw. Speichern von Daten, welche durch das Autorisierungsmittel 5 bzw. 49 nicht autorisiert sind. Es ist vorgesehen, dass vor und während der Initialisierung der Postmaschine 1, 2 mit vorbestimmten INIT-Daten die Abfrage des Autorisierungsmittels 5 bzw. 49 vorgenommen wird.

Die Chipkarten 49 werden nachfolgend INIT-Card oder Dealer Card genannt und gestatten folgende ausschliessliche Zugriffsrechte für:
- ein Initialisieren der Frankiermaschine im Initialisierungsmodus,
- ein Testen der Frankiermaschine im Service Mode,
- ein Frankieren mit dem Portowert Null im Frankiermodus und
- ein Generieren einer Mastercard für den Käufer bzw. Endnutzer der Frankiermaschine, wobei die Mastercard Zugriffsrechte zu allen wichtigen Funktionen der Frankiermaschine bietet, welche nicht ausschliessliche Zugriffsrechte der Dealer Card sind.

Die Dealer Card gestattet zum Beispiel zweimal infolge eine Mastercard zu generieren. Die Frankiermaschine erkennt automatisch, wenn eine noch "jungfräuliche" Chipkarte gesteckt wird, dass eine Mastercard generiert werden soll und führt diese Generierung selbsttätig durch. Die Dateneingabe von vorbestimmten INIT-Werten beim Intialisieren und ein anschliessendes Testen sind bei Frankiermaschinen üblich.

Folgende Informationen umfassen die Init-Daten, die am Eintrittpunkt des jeweiligen Bestimmungslandes in die Frankiermaschine beim Initialisieren eingespielt werden müssen:
- Datum der Batterie des Sicherheitsmoduls,
- Telefonnummer des Datenzentrums,
- Portoabrufnummer PAN,
- vorbestimmte INIT-Werte und
- extra Daten sowie
- ggf. Schlüssel mindestens für die Fernwertvorgabe.

In einem - nicht gezeigten - nichtflüchtigen Schreib/Lesespeicher extern vom Sicherheitsmodul können die extra Daten sowie eine Vielzahl an Telefonnummern gespeichert werden. Die Telefonnummer des Telportodatenzentrums kann sich bei einer Voice-Vorgabe unterscheiden von derjenigen bei einer Modem-Vorgabe und ist länderspezifisch verschieden. Die übrigen INIT-Daten werden in den internen nichtflüchtigen Schreib/Lesespeicher des Sicherheitsmoduls geladen.

Während Daten mit geringer Stellenanzahl, wie zum Beispiel die Telefonnummer des Teleportodatenzentrums, die Portoabrufnummer PAN und das Datum der Batterie des postalischen Sicherheitsmoduls per Tastatur eingegeben werden können, ist es vorteilhaft, wenn eine Kommunikationsverbindung per Modem zu einer Datenzentrale hergestellt oder ein Service-Computer angeschlossen wird, welche dazu ausgestattet sind, die erforderlichen Schlüssel und ggf. die extra Daten zu laden.

Moderne Frankiermaschinen enthalten ein Sicherheitsmodul. Letzteres wird auch als postalisches Sicherheitsgerät PSD oder sicheres Abrechnungsgerät SAD bezeichnet. Von einem postalischen Sicherheitsgerät PSD (Postage Secure Device) wird gesprochen, wenn es ein kryptographisches Schlüsselpaar für ein Public Key-Verfahren erzeugen kann. In der nicht vorveröffentlichten DE 100 20 904 A1 wird ein Verfahren zur sicheren Distribution von Sicherheitsmodulen vorgeschlagen, wobei ein PSD die Schlüssel erzeugt.

Im Unterschied dazu wird bei einem Secret Key Verfahren nur ein gemeinsamer geheimer Schlüssel verwendet. Von einem sicheren Abrechnungsgerät SAD wird nachfolgend gesprochen, wenn es einen gemeinsamen kryptographischen Schlüssel laden kann. Der Computer der Datenzentrale am Empfangs- und Initialisierungsort ist ebenso wie die Frankiermaschine mit einem Modem ausgestattet und die Kommunikationsverbindungsleitung wird als sicher angesehen.

Beim Initialisieren wird in ein sicheres Abrechnungsgerät SAD mindestens ein gemeinsamer geheimer Schlüssel DES-Key geladen, mindestens für die Fernwertvorgabe von einem Guthaben, wo ein Secret Key Verfahren verwendet wird. Weiterhin kann ein gemeinsamer geheimer Schlüssel MAC-Key eines Postbeförderers geladen werden, welcher für die Erzeugung eines Sicherheitsabdruckes und dessen Überprüfung erforderlich ist. Das Laden und das ständige Vorhandensein eines Initialisierungsprogrammes im Programmspeicher der Frankiermaschine erfordert besondere Sicherheitsmassnahmen im SAD (Secure Accounting Device). So wird die postalisch relevante SAD-Seriennummer bei der Herstellung schon vorinitialisiert und kann später nicht mehr verändert werden, ausser ein neues SAD wird eingebaut. Eine Seriennummer der Frankiermaschine ist ungleich der SAD-Seriennummer und postalisch nicht weiter relevant.

Die Frankiermaschine wird in eine Box verpackt, auf der ein Label mit der SAD-Seriennummer klebt. Die Box wird verschickt in ein vom Herstellungsort entferntes Bestimmungsland. Am Warenannahmeort des Bestimmungslandes (Single Point of Entry) erfolgt nach dem Auspacken ein Initialisieren. Wenn Parameter der Frankiermaschine im Initialisierungsmodus geändert werden müssen, dann wird aufgezeichnet, von wem diese Änderungen vorgenommen werden. Jede Dealer Card hat eine einzigartige Berechtigungs-Nummer zum Freischalten des Initialisierungs-Modus.

Beim Initialisieren werden die folgenden Schritte ausgeführt:
a) Überführen einer Frankiermaschine in einen Initialisierungsmodus, beispielsweise im Ergebnis der Betätigung eines Betätigungsmittels des Userinterfaces, und Herstellen einer Verbindung zu einer Datenquelle (4) via Modem- bzw. mittels einer Laptop- oder PC-Schnittstelle,
b) Autorisierung der Initialisierung mittels eines Autorisierungsmittels (5), z.B. mittels FP-Card, die in den Chipkartenleser eingesteckt ist,
c) Eingabe mindestens des Datums BAT_DATE_SAD, z.B. = 07 00, der Batterie des Sicherheitsmoduls (11) SAD, einer Telefonnummer des Teleportodatenzentrum TDC des Bestimmungslandes und einer Portoabrufnummer PAN z.B. = 101 04711,
d) Senden der Seriennummer SAD-SN des Sicherheitsmoduls (11) zum Teleportodatenzentrum TDC des Landes, wobei dort ein Vergleich der gesendeten Seriennummer SAD-SN mit einer gespeicherten Seriennummer stattfindet und eine Mitteilung generiert wird,
e) Empfangen einer vom Teleportodatenzentrum TDC gesendeten Mitteilung durch die Frankiermaschine und Laden mindestens von Schlüsseln DES-Key's für ein Guthabennachladen in das Sicherheitsmoduls (11) SAD, wobei letztere einschliessen: Key(0), Key(1), Kvar,
f) Beenden der Initialisierung und Aufhebung der Autorisierung durch Entfernen des Autorisierungsmittels (5), zum Beispiel der FP-Card.

Die Dateneingabe kann via Tastatur oder via Chipkarte erfolgen. Bei Postmaschinen, die nach einem Tintenstrahldruckverfahren drucken, ist vorgesehen, dass eine Dateneingabe von Extra Daten erfolgt, welche die Ink-Jet-Cartridge-Daten einschliessen. Die Ink-Jet-Cartridge-Daten enthalten eine Hersteller-Identifikationsnummer, die für alle Tintenkartuschen des Herstellers gleich ist, welche in der Postmaschine verwendet werden dürfen. Alternativ ist vorgesehen, dass die vom Teleportodatenzentrum TDC gesendete Mitteilung die Ink-Jet-Cartridge-Daten aufweisen. Die extra Daten werden in dem - nicht gezeigten - nichtflüchtigen Schreib/Lesespeicher extern vom Sicherheitsmodul gespeichert. Ausserdem ist für Frankiermaschinen vorgesehen, dass die vom Teleportodatenzentrum TDC gesendete Mitteilung einen Schlüssel MAC-Key für einen Sicherheitsabdruck enthält, der durch die Frankiermaschine empfangen und in einen nichtflüchtigen Speicher des Sicherheitsmoduls 11 geladen wird.

Nach dem vorgenannten Initialisierungs-Prozess ist die Initalisierung des SAD abgeschlossen und die Frankiermaschine wandert zum Verkäufer ins Verkaufsregal. Beim Verkäufer werden bei einem Kundenauftrag die Kundendaten & der Wunsch erfasst und zu einem separaten Klicheé-Department übermittelt. Im separaten Klicheé-Department werden :
- Klicheédaten generiert,
- Graphik- & Adressendaten zu Kundendaten zugeordnet in einer zentralen Datenbank gespeichert,
- eine Chipkarte zum Kunden verschickt, wobei entweder ein Wunsch- oder Dummy-Klischee (Graphik- & Adressendaten) geliefert werden.

Beim Kunden werden im Rahmen eines Autorisationsprozesses o.g. Graphik- & Adressendaten u.a. kundenspezifische Daten aus einer Chipkarte geladen sowie nach einer Hierarchie Zugangsberechtigungskarten erzeugt. Deren Speicherung erfolgt im Meter aber nicht im SAD.

Die Autoinstallation beim Kunden per Modem wurde prinzipiell bereits in der nicht vorveröffentlichten DE 199 13 067 A1 sowie das Laden von weiteren Daten (Städte-,Werbe-,Carrier-Klischée) beim Verkäufer per Chipkarte wurde prinzipiell bereits in der DE 199 13 066 A1 vorgeschlagen. Die vorgenannten Anmeldungen tragen die folgenden Titel: Verfahren zur automatischen Installation von Frankiereinrichtungen und Anordnung zur Durchführung des Verfahrens sowie Verfahren und Anordnung zur Druckstempeleingabe in eine Frankiermaschine.

Im Rahmen eines Validationsprozesses wird nur bei der ersten Femwertvorgabe zum Guthaben-Laden nochmals manuell die Portoabrufnummer PAN eingegeben und im Meter mit der gespeicherten Portoabrufnummer PAN verglichen und dann ein Guthaben-Laden per Modem durchgeführt. Die Guthaben-Speicherung erfolgt im SAD.

## Patentansprüche

1. Postmaschine mit einer Steuerung (9), einem Sicherheitsmodul (11) und einem nicht entfernbaren Programmspeicher (10), wobei der Programmspeicher (10) ein Initialisierungsprogramm enthält und betriebsmäßig mit dem Sicherheitsmodul (11) verbunden ist, ein entfernbares Autorisierungsmittel (5) betriebsmäßig mit der Postmaschine (1, 2) verbindbar und abfragbar ausgebildet ist und wobei das Sicherheitsmodul (11) dazu programmiert ist, eine Überprüfung der Autorisierung durchzuführen und die Initialisierung bei fehlender Autorisierung zu verhindern, **dadurch gekennzeichnet, dass** das Autorisierungsmittel an die Postmaschine indirekt über eine Datenquelle (4) angeschlossen ist, dass eine erste serielle Schnittstelle (92a) der Base (2) der Postmaschine zum Anstecken der Datenquelle (4) ausgebildet ist, dass das Autorisierungsmittel (5) über eine Parallelschnittstelle an die Datenquelle (4) angeschlossen ist und dass die Datenquelle (4) ein Personalcomputer oder ein Laptop ist.

## Claims

1. A mail-processing machine having a control (9), a security module (11) and a non-removable program memory (10), wherein the program memory (10) contains an initialization program and is operationally connected to the security module (11), a removable means of authorization (5) is formed so that it can be operationally connected to the mail-processing machine (1, 2) and can be interrogated, and wherein the security module (11) is programmed to carry out a check on the authorization and to prevent the initialization in the absence of authorization, **characterised in that** the means of authorization is indirectly connected to the mail-processing machine by way of a data source (4), **in that** a first serial interface (92a) of the base (2) of the mail-processing machine is formed for the attachment of the data source (4), **in that** the means of authorization (5) is connected to the data source (4) by way of a parallel interface, and **in that** the data source (4) is a personal computer or a laptop.

## Revendications

1. Machine postale dotée d'une commande (9), d'un module de sécurité (11) et d'une mémoire de programme (10) non amovible, la mémoire de programme (10) contenant un programme d'initialisation et étant reliée en fonctionnement au module de sécurité (11), un moyen d'autorisation (5) amovible pouvant être relié en fonctionnement à la machine postale (1, 2) et étant conçu pour être interrogeable, et le module de sécurité (11) étant programmé pour réaliser une vérification de l'autorisation et empêcher l'initialisation en cas d'absence d'autorisation, **caractérisée en ce que** le moyen d'autorisation est connecté à la machine postale indirectement par l'intermédiaire d'une source de données, (4), **en ce qu'**une première interface série (92a) de la base (2) de la machine postale est conçue pour le branchement de la source de données (4), **en ce que** le moyen d'autorisation (5) est connecté à la source de données (4) par l'intermédiaire d'une interface parallèle, et **en ce que** la source de données (4) est un ordinateur personnel ou un ordinateur portable.
